# EUROPÄISCHE PATENTANMELDUNG

(11) **EP 2 645 134 A2**
(43) Veröffentlichungstag der Anmeldung: **02.10.2013**
(21) Anmeldenummer: 13157375.0
(22) Anmeldetag: 01.03.2013
(51) Int. Cl.: G01V 3/10

(54) **Schleifenrahmen**

(30) Priorität: 29.03.2012 DE 202012003223 U
(71) Anmelder: Ebinger, Klaus, 51149 Köln (DE)
(72) Erfinder: Ebinger, Klaus, 51149 Köln (DE)
(74) Vertreter: Heim, Florian Andreas

(57) **Zusammenfassung**

Die Erfindung betrifft einen Schleifenrahmen, der variabel ausgelegt ist und flexibel und leicht zu handhaben ist.

Es ist vorgesehen standardisierte Längen von Verbindungsrohren zu verwenden, wobei zwei Verbindungsrohre mit einer Gelenkverbindung miteinander gekoppelt sind und die Verbindungsrohre zu unterschiedlichen Schleifenformen mit unterschiedlichen umschlossenen Schleifeninnenflächen anortenbar sind.

## Beschreibung

Die Erfindung betrifft einen Schleifenrahmen nach dem Oberbegriff des Anspruches 1.

Bei Suchgeräten zur Detektion von metallischen Objekten im Bodenbereich werden derartige Schleifenrahmen verwendet, um über ein daran befestigtes Schleifenkabel mit mindestens einer Suchschleife ein elektromagnetisches Primärsignal in den Bodenbereich abzustrahlen, wodurch metallische Suchobjekte im Boden detektiert werden können.

Ein Schleifenrahmen der vorausgehend genannten Art ist zum Beispiel aus der EP 767 390 B1 bekannt.

Der dort beschriebene Schleifenrahmen betrifft ein Hexagon, das zusammen mit dem im Innenflächenbereich vorgesehenen Stabilisierungsstangen zusammenfaltbar sein soll.

Die bei diesem bekannten Schleifenrahmen verwendeten Gelenkverbindungen sind relativ kompliziert aufgebaut, da darin zwei Rahmenstangen und mindestens eine Stabilisierungsstange aufgenommen werden müssen und der Schleifenrahmen insgesamt noch faltbar sein muss.

Aus dieser relativ starren Struktur des Rahmenaufbaus ergibt sich auch der Nachteil, dass einzelne Elemente dieses Schleifenrahmens nicht im Sinne eines Bausatzes für andere Schleifenkonturen einsetzbar sind.

Ein anderer Schleifenrahmen ist aus der DE 88 00 815 U1 bekannt.

Die dort angesprochenen Schleifenrahmen sind zwar bausatzartig mit geraden und winkelförmigen Rohrelementen und T-Stücken aufgebaut. Diese Schleifenrahmen gehen jedoch nicht über Reckeckformen und deren Unterteilung in kleine Rechteckformen hinaus.

Die Anpassung dieser bekannten Schleifenrahmen an andere Rahmenformen und Konturen ist daher mit dieser Lehre nicht möglich.

Ein weiterer Nachteil bei einem zuletzt genannten Schleifenrahmen, der von einfachen, steckbaren PVC-Rohren handelt, ist, dass größere Schleifenrahmen relativ schwer wurden und in tropischen Gebieten durch den hohen Temperatureinfluss leicht erweichen konnten und daher durchhängen. Es sind dann Hilfsmaßnahmen am Rahmen erforderlich, die das Gewicht weiter erhöhen können. Bei steckbarer Auslegung dieser bekannten Schleifenrahmen bestand zudem das Risiko, dass Sand oder Schmutz in entsprechende Steckmuffen geriet und dabei auch Schwierigkeiten bei der Demontage des Schleifenrahmens auftreten konnten.

Die Wirkungsweise bei Suchgeräten mit großen Schleifenrahmen beruht auf dem Prinzip der Impuls-Elektromagnetik beziehungsweise Pulstechnik. Hierbei wird ein hoher DC-Strom impulsartig durch eine Suchschleife getrieben, wodurch ein gepulstes Magnetfeld mit der Abgabe von Primärsignalen generiert wird. Diese Primärsignale induzieren in gesuchten metallischen Objekten einen Wirbelstrom, der zu einer sekundären Magnetisierung beziehungsweise zur Abgabe eines Sekundärsignales führt.

Für die Detektion des entsprechenden metallischen Objektes wird das Phänomen genutzt, dass durch die Sprungfunktion des Primärsignales in den metallischen Objekten eine Magnetisierung erfolgt, deren Zeitkonstante wesentlich größer ist als die des Primärsignales.

Im Prinzip handelt es sich daher um ein elektromagnetisches Echoverfahren, bei dem die Magnetisierung des gesuchten metallischen Objektes als Sekundärsignal auf eine Such- beziehungsweise Empfängerschleife als Detektionssignal wirkt.

Generell gesehen können kleine Suchschleifen und entsprechende Schleifenrahmen ein relativ konzentriertes Magnetfeld emittieren, womit besonders kleine Objekte stärker erregt werden, als mit großen Suchschleifen, wo das Sekundärsignal möglichst von Signalen kleiner Objekte entkoppelt werden sollte.

Mittels großer Suchschleifen können weitläufige, tief eindringende Magnetfelder erzeugt werden, womit dann auch tief liegende metallische Objekte, zum Beispiel Bomben als Blindgänger oder dergleichen, aufgespürt werden können.

Unter Berücksichtigung dieser prinzipiellen Funktionsweise von Metallsuchgeräten ergibt sich in der Praxis das Erfordernis, eine günstige beziehungsweise optimale Anpassung des Durchmessers des eingesetzten Schleifenrahmens zu erreichen, mit dem Grundprinzip, für kleine Metallobjekte kleine Schleifenrahmen einzusetzen. Für Objekte mittlerer Größe einen mittleren Durchmesser des Schleifenrahmens und für große Metallobjekte, wie zum Beispiel Granaten oder Bomben, große Schleifenrahmen zur Detektion dieser Gegenstände auch in größerer Tiefe, vorzusehen.

Der Erfindung liegt die **Aufgabe** zugrunde, einen variablen Schleifenrahmen zu schaffen, der flexibel und leicht zu handhaben ist, wobei mit den Elementen des Schleifenrahmens entsprechend den jeweiligen Suchbedingungen, angepasste Schleifenrahmen in größerer oder kleinerer Form erstellt werden können.

Die Aufgabe wird erfindungsgemäß bei einem gattungsgemäßen Schleifenrahmen durch die Merkmale des kennzeichnenden Teils des Anspruchs 1 gelöst. Vorteilhafte Weiterbildungen sind in den Unteransprüchen und in der Beschreibung angeführt.

Ein wesentlicher Kerngedanke der Erfindung kann darin gesehen werden, einen gewichtsmäßig leichten Schleifenrahmen zu schaffen, der vorteilhafterweise ausgehend von einer Oktagon-Schleife in eine andere Form eines Schleifenrahmens in einfacher Weise umgewandelt werden kann, um die Suchbedingungen mit dem abgeänderten Schleifenrahmen besser erfüllen zu können.

Mit anderen Worten kann zum Beispiel eine Oktagon-Schleife mit 8 Verbindungsrohren und 8 Gelenkverbindungen einschließlich Schleifenkabel als Großschleife einfach in eine Quadratform mit 4 Verbindungsrohren und Gelenkverbindungen abgewandelt werden, so dass bei gleicher Länge der Verbindungsrohre mit einer Segmentlänge von 100 cm eine relativ kleine Schleifeninnenfläche von etwa 1 m² geschaffen wird, wobei hiermit ein konzentrierteres Magnetfeld emittiert und insbesondere kleinere Suchobjekte besser detektiert werden können.

Abhängig von der Form eines größeren Schleifenrahmens können daher unterschiedliche Schleifeninnenflächen beziehungsweise Flächenüberdeckungen und auch unterschiedliche Eindringtiefen in den Boden erreicht werden.

Das Schleifenkabel, das auch mehrere Adern aufweisen kann, und als Sendespule wie als Empfangsspule einsetzbar ist, kann in einfachster Weise auf dem Schleifenrahmen zum Beispiel mittels Klettbänder fixiert werden. Auch können zur Fixierung Clip-Einrichtungen eingesetzt werden.

Das häufig eingesetzte PI-Verfahren (Puls-Induktions-Verfahren) lässt aufgrund der unterschiedlichen Zeitkonstanten beim Sendeimpuls und dem Empfangssignal den Betrieb eines entsprechenden Suchgerätes beziehungsweise Detektor auch mit einem Schleifenkabel zu.

Die Verbindungsrohre und die Gelenkverbindungen sind geeigneterweise aus einem Kunststoff, insbesondere auf der Basis von Polyacrylat, so dass insgesamt ein relativ leichtes Gewicht des Schleifenrahmens erreicht werden kann.

Ausgehend von einem Octagon-Bausatz für den Schleifenrahmen ist es aufgrund der einfachen Steck- und Klemmverbindungen sowie leicht festsetzbarer Arretiereinrichtungen möglich, auch Abänderungen in der Form eines größeren Schleifenrahmens zu schaffen.

Gleiche Verbindungsrohre von zum Beispiel 100 cm oder 50 cm vorausgesetzt, erlauben daher ausgehend etwa von einem dreieckförmigen Schleifenrahmen eine Vielzahl von Rechteck-Rahmen mit unterschiedlich großen umschlossenen Schleifeninnenflächen.

Die bevorzugte Ausgangsbasis eines Octagon-Rahmens für einen derartigen Bausatz kann auch darin gesehen werden, dass sich die Octagon-Form einer Kreisform weitgehend annähernd, was die Erzeugung eines weitgehend gleichförmigen elektromagnetischen Feldes insbesondere in der Sendephase verbessert.

Die Gelenkverbindungen sind zweckmäßigerweise als einfache Steck- und Klemmverbindungen für die Enden der Verbindungsrohre ausgelegt. Gleiches gilt auch für die Gelenkverbindungen mit nur zwei Gelenkteilen, die stufenlos aber auch in Stufen zum Beispiel mittels einer Zahn-Rast-Verbindung in einem Bereich von 60° bis 300° verschwenkbar sind. Diese Verbindungsart von Gelenken und Rohren ist sehr robust und relativ störunempfindlich, was gerade beim Einsatz in unentwickelten geografischen Bereichen von Vorteil ist.

Die Gelenkverbindungen sind einfach mit nur zwei Gelenkteilen konstruiert, wobei jeweils rohrartige Öffnungen als Aufnahmebereiche für die Enden von Verbindungsrohren vorgesehen sind.

Um die Form des Schleifenrahmens möglichst stabil auch bei Großschleifen beibehalten zu können, wird für Verbindungsrohre und Gelenkverbindungen zweckmäßigerweise ein hochfester, leichter Kunststoff gewählt. Insbesondere eignet sich hierfür ein Kunststoff auf der Basis von Polyacrylat, aus Polyester oder Copolymeren davon. Der entsprechende Kunststoff kann auch zusätzlich glasfaserverstärkt sein oder mittels einer Kohlenstofffasermatrix noch fester ausgebildet sein. Hierdurch vermeidet man insbesondere Formänderungen bei extremen Einsatzbedingungen, zum Beispiel im Wüstenbereich.

Die Verbindungsrohre können in dieser Hinsicht geeigneter Weise als glasfaserverstärkte Kunststoffrohre und die Gelenkverbindungen aus glasfaserverstärktem Polyamid hergestellt sein.

Die Gelenkverbindung ist unkompliziert als Knickgelenk ausgelegt, so dass eine einfache Arretierung des Gelenkes bei hoher Stabilität des Gelenkes selbst, auch bei einem Umsetzen der Gelenkteile, erreicht wird. Der Einsatz von Schnellspanneinrichtungen verbessert die einfache und rasche Austauschbarkeit von Verbindungsrohren.

Bei Großschleifen, zum Beispiel einem Octagon-Schleifenrahmen mit Segmentlängen von 100 cm, sind zweckmäßigerweise Trageinrichtungen an gegenüberliegenden Bereichen des Rahmens vorgesehen, so dass zwei Personen den Rahmen tragen und führen können. Derartige Trageinrichtungen sind in einfacher Form mittels Seilen oder Griffen realisierbar.

Ausgehend von gleichlangen Verbindungsrohren mit 100 cm sind mittels des Bausatzes des erfindungsgemäßen Schleifenrahmens zum Beispiel bei einer Octagon- Form eine Schleifeninnenfläche beziehungsweise Flächenüberdeckung von etwa 4 m² erreichbar. Eine gleiche Flächenüberdeckung wird bei einer Quadratform mit 8 Verbindungsrohren erreicht.

Mittels einer Rechteckform mit 6 Verbindungsrohren kann eine Flächenüberdeckung von etwa 2 m² erzeugt werden. Für eine Kleinschleife kann daher in Quadratform mit 4 Verbindungsrohren eine Schleifeninnenfläche von etwa 1 m² erzeugt werden.

Die Längenabmessung von 100 cm pro Verbindungsrohr ist nur exemplarisch zu verstehen, wobei kleinere oder größere Segmentlängen entsprechend den Suchanforderungen realisierbar sind.

Der erfindungsgemäße Schleifenrahmen lässt daher eine dem Einsatzzweck angepasste unterschiedliche Rahmenform, im Sinne eines variablen Suchrahmensystems, aufgrund der bausatzartigen Zusammenstellung und Zerlegbarkeit zu. Auch Hexagon-Schleifen bis zu Dreieckschleifen sind denkbar. Je nach Größe wird der Schleifenrahmen von zwei oder einer Person getragen. Bei einer Person kann dies zum Beispiel über Schulterriemen erfolgen, wobei die Person im Zentrum der Schleife geht.

Die Erfindung wird nachfolgend anhand einiger schematischer Ausführungsbeispiele noch näher erläutert. Es zeigen:
- Fig. 1: schematisch einen Schleifenrahmen in Octagon-Form;
- Fig. 2: das Beispiel einer bevorzugten Gelenkverbindung in perspektivischer Ansicht und schematischer Form mit zwei miteinander gekoppelten Gelenkteilen;
- Fig. 3: die perspektivische Ansicht eines Gelenkteiles aus Fig. 2 in einer um 180° umgekehrten Darstellung mit Blick auf bogenförmig angeordnete Zähne für eine Arretierung in Stufen;
- Fig. 4: eine Seitenansicht eines Gelenkteils nach Fig. 3;
- Fig. 5: eine perspektivische Ansicht eines weiteren Gelenkteils in einer Lageanordnung vergleichbar der zu Fig. 2;
- Fig. 6: die Octagon-Form im Sinne eines Bausatzes für einen Schleifenrahmen;
- Fig. 7: einen Schleifenrahmen in Rechteckform mit 8 Verbindungsrohren;
- Fig. 8: die Rechteckform eines Schleifenrahmens mit 6 Verbindungsrohren; und
- Fig. 9: einen kleinen Schleifenrahmen in Rechteckform mit 4 Verbindungsrohren.

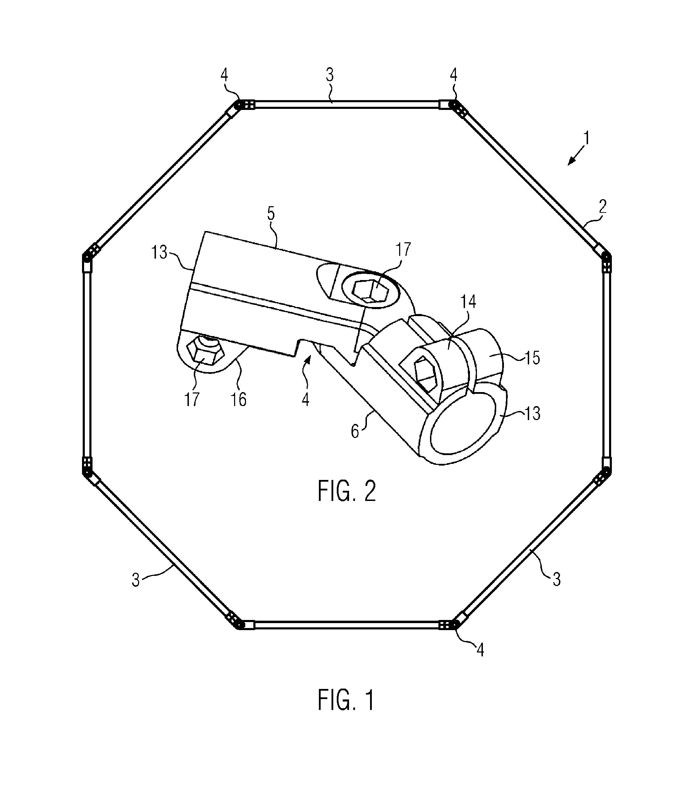

Der erfindungsgemäße Schleifenrahmen 1 wird nach Fig. 1 in Form eines Octagon-Rahmens 2 dargestellt. In diesem Fall sind 8 Verbindungsrohre 3 mittels Gelenkverbindungen 4, die bevorzugt als Knickgelenk ausgelegt sind, fest aber lösbar, miteinander verbunden.

Abhängig von der Segmentlänge oder Länge eines Verbindungsrohres 3, zum Beispiel mit 100 cm Länge, kann bei dieser Octagon-Form eine Schleifeninnenfläche beziehungsweise Flächenüberdeckung mit etwa 4 m² erreicht werden.

Im Vergleich zu kleineren Schleifenrahmen können daher bei dieser Octagon-Form höhere Eindringtiefen in den Boden von 1 m beziehungsweise 2 m und mehr erreicht werden.

In Fig. 2 ist eine einzelne Gelenkverbindung 4 gezeigt, wie sie bei einem Schleifenrahmen 1 einsetzbar ist.

Die Gelenkverbindung 4 weist zwei Gelenkteile 6, 5 auf, die über abgeflachte und am Rand gerundete Endbereiche miteinander arretierbar sind.

Die Gelenkteile 6, 5 sind mit Ausnahme der formschlüssigen Arretiereinrichtung weitgehend gleich aufgebaut.

Die bevorzugt aus Kunststoff bestehenden Gelenkteile 5, 6 weisen einen rohrförmigen Grundkörper 13 mit Klemmbacken 15 und einem mittig vorgesehenen Schlitz 14 auf. Dieser rohrförmige Grundkörper 13 ist zum Einstecken des Endes eines Verbindungsrohres 3 bestimmt, wobei eine einfache kraftschlüssige Festlegung über die Klemmbacken 15, mit zum Beispiel einer eingesetzten Schraube und Mutter oder einem Schnellverschluss, erreicht werden kann.

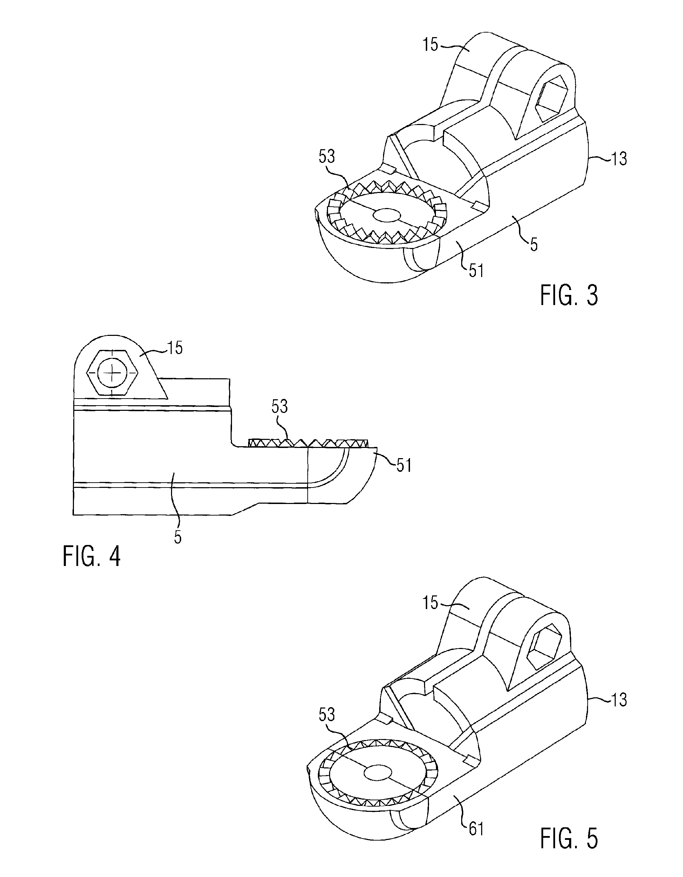

Am gegenüberliegenden Ende zum rohrförmigen Grundkörper 13 hat ein Gelenkteil 6 einen abgeflachten Endbereich 61 (Fig. 5), der mit Zahnvertiefungen 63 ausgestattet ist.

Letztere erlauben eine formschlüssige, stufenmäßige Verstellbarkeit und Verschwenkbarkeit mit den Zähnen 53 des Gelenkteiles 51 (Fig. 3).

Zur Erzeugung der Gelenkverbindung 4 sind die abgeflachten Endbereiche 51, 61 der beiden Gelenkteile 5, 6 zueinander zeigend in Eingriff über die Zähne 53 und Zahnvertiefungen 63 gebracht.

In der Fig. 2 ist die winkelmäßige Verstellbarkeit mit etwa 135° der zwei Gelenkteile 5, 6 zueinander gezeigt.

Die winkelmäßige Verstellbarkeit und Arretierung der beiden Gelenkteile 5, 6 zueinander lässt sich daher schnell und einfach realisieren, insbesondere wenn Schnellspanneinrichtungen für Klemmbacken 15 und/oder die Arretiereinrichtung benutzt werden.

In Fig. 3 ist das Gelenkteil 5 perspektivisch und vereinfacht dargestellt.

Das Gelenkteil 5 ist in Fig. 2 als linkes Gelenkteil mit einer Drehung um 180° um die Längsachse als oberes Gelenkteil dargestellt.

Speziell wird hierbei auf die mittels dreieckförmiger Zähne 53 realisierte stufenmäßige Verstellbarkeit hingewiesen.

Die Seitenansicht nach Fig. 4 zeigt das Gelenkteil 5 mit den Klemmbacken 15 und darin eingelassener Sechskant-Vertiefung zum Einsetzen einer formschlüssigen Mutter, die mit einer von der Gegenseite eingebrachten Schraube in Eingriff bringbar ist.

Der Arretierbereich ist im abgeflachten Endbereich 51 beziehungsweise 61 (Fig. 5) vorgesehen.

Entsprechend der Fig. 2 ist das Gelenkteil 5 umgekehrt auf den abgeflachten Endbereich 61 des Gelenkteils 6 vorgesehen, so dass über die Zahnverbindung eine stufenweise Verstellbarkeit gegeben ist. Die Arretierung kann ebenfalls wie in Fig. 2 gezeigt über eine Schraube 17 mit nicht gezeigter Mutter oder eingelassenem Gewinde erreicht werden.

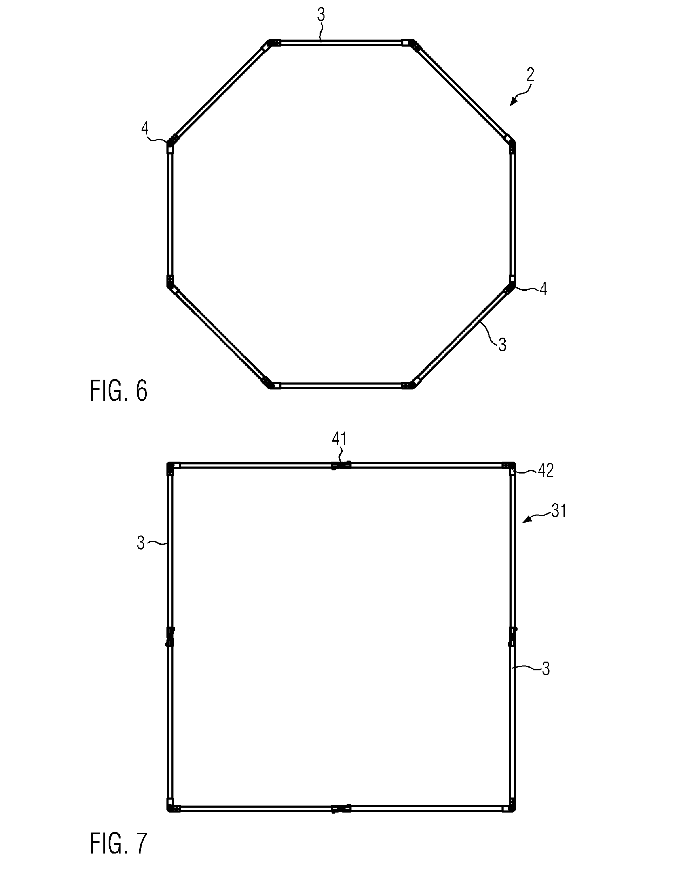

Fig. 6 zeigt einen Schleifenrahmen als Octagon-Rahmen 2 mit entsprechenden Verbindungsrohren 3 und den erforderlichen Gelenkverbindungen 4.

Ausgehend von einem derartigen Bausatz, dem eigenständiger Erfindungscharakter zukommt, können aus den Elementen des Octagon-Rahmens die nachfolgend schematisch dargestellten weiteren Schleifenrahmen gebildet werden.

Fig. 7 zeigt einen Rechteck-Schleifenrahmen 31 mit Gelenkverbindungen 41, 42 und 8 Verbindungsrohren 3.

In dieser Form und Abmessung kann daher mit einem Schleifenrahmen nach Fig. 7 eine Flächenüberdeckung von etwa 4 m² erreicht werden. Die einzelnen Gelenkteile an einem Verbindungsrohr 3 werden daher zweckmäßigerweise um 90° gedreht, an den unterschiedlichen Enden angeordnet, so dass darüber eine höhere Stabilität erreicht wird. Gleichzeitig kann jedoch der in Fig. 7 gezeigte Schleifenrahmen 31 auch bei Lösung einer Arretierverbindung in der Mittelachse übereinandergeschlagen werden.

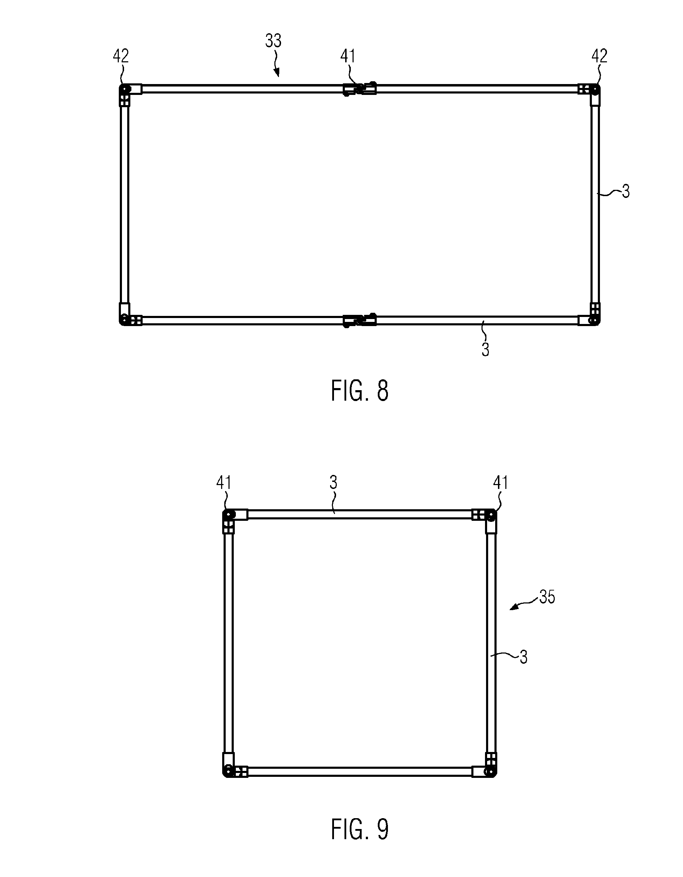

Fig. 8 zeigt einen Schleifenrahmen 33 in Rechteckform mit 6 Verbindungsrohren, der eine Flächenüberdeckung von ca. 2 m² erreichen kann.

Fig. 9 zeigt in verkleinerter Form einen rechteckförmigen beziehungsweise quadratischen Schleifenrahmen 35 mit 4 Verbindungsrohren 3, womit bei einer Segmentlänge von 100 cm eine Flächenüberdeckung von 1 m² erreicht wird.

Der erfindungsgemäße Schleifenrahmen lässt sich daher, im Sinne eines variablen Suchrahmensystems, insbesondere bei einer Ausgangssituation von einem Octagon-Rahmen 2 in unterschiedliche andere Rahmenformen umsetzen, wobei dies insbesondere auf die speziellen Einsatzbedingungen und Suchkriterien ausgerichtet werden kann.

## Patentansprüche

1. Schleifenrahmen für Suchgeräte, insbesondere Metallsuchgeräte,
mit mehreren in der Länge standardisierten Verbindungsrohren (3) und mehreren Gelenkverbindungen (4) zur Kopplung von Verbindungsrohren (3) miteinander, und
mit mindestens einem der Kontur des Rahmens (1; 2; 31; 33; 35) folgenden Schleifenkabel als Suchschleife zum Abstrahlen eines elektromagnetischen Primärsignales zur Detektion eines Suchobjektes,
**dadurch gekennzeichnet,**
**dass** jeweils zwei Verbindungsrohre (3) in einer Gelenkverbindung (4) miteinander gekoppelt sind,
**dass** Verbindungsrohre (3) und Gelenkverbindungen (4) zu unterschiedlichen Schleifenformen und/oder unterschiedlich großen, umschlossenen Schleifeninnenflächen anordenbar sind, und
**dass** die Gelenkverbindung (3) für Gelenkwinkel im Bereich 60° bis 300° ausgelegt ist.

2. Schleifenrahmen nach Anspruch 1,
**dadurch gekennzeichnet,**
**dass** die Gelenkverbindung zwei Gelenkteile (5, 6) mit jeweils mindestens einem form- und/oder kraftschlüssigen Aufnahmebereich (13) für das Ende eines Verbindungsrohres (3) aufweist, und
**dass** die Gelenkteile (5, 6) in einer Ebene gegeneinander dreh- und verstellbar sind und eine Arretiereinrichtung (53, 63, 17) aufweisen.

3. Schleifenrahmen nach Anspruch 2,
**dadurch gekennzeichnet,**
**dass** die Arretiereinrichtung stufenlos oder formschlüssig (53, 63) in Stufen verstellbar ausgebildet ist.

4. Schleifenrahmen nach Anspruch 2 oder 3,
**dadurch gekennzeichnet,**
**dass** die Arretiereinrichtung eine bogenförmig angeordnete Verzahnung (53, 63) mit erhabenen Zähnen (53) an einem Gelenkteil (51) und Zahnvertiefungen (63) am anderen Gelenkteil (6) aufweist.

5. Schleifenrahmen nach einem der Ansprüche 1 bis 4,
**dadurch gekennzeichnet,**
**dass** die Verbindungsrohre und/oder Gelenkverbindungen aus hochfestem, leichtem Kunststoff, insbesondere auf der Basis von Polyacrylat, aus Polymethacrylat, aus Polyester oder Copolymeren davon bestehen.

6. Schleifenrahmen nach Anspruch 5,
**dadurch gekennzeichnet,**
**dass** die Verbindungsrohre (3) und/oder Gelenkverbindungen (4) aus einem glasfaserverstärkten Kunststoff oder aus einem mit einer KohlenstofffaserMatrix verstärkten Kunststoff bestehen.

7. Schleifenrahmen nach einem der Ansprüche 1 bis 6,
**dadurch gekennzeichnet,**
**dass** die Gelenkverbindung (4) als Knickgelenk ausgelegt ist und Schnellspanneinrichtungen zum Fixieren der Verbindungsrohre (3) im entsprechenden Aufnahmebereich (13) aufweist.

8. Schleifenrahmen nach einem der Ansprüche 1 bis 7,
**dadurch gekennzeichnet,**
**dass** das Schleifenkabel am Rahmen fixierbar, insbesondere aufclipsbar ist.

9. Schleifenrahmen nach einem der Ansprüche 1 bis 8,
**dadurch gekennzeichnet,**
**dass** mit der standardisierten Länge der Verbindungsrohre (3) und den Gelenkverbindungen (4) Suchschleifen als Octagon (2), Polygon, oder Viereck (31), Quadrat (35), Rechteck (33), herstellbar sind.

10. Schleifenrahmen nach einem der Ansprüche 1 bis 9,
**dadurch gekennzeichnet,**
**dass** bei einer Segmentlänge von 100 cm zwischen den Drehachsen an beiden Enden eines Verbindungsrohres (3) und der Form des Rahmens (1) als Octagon (2) eine Schleifeninnenfläche von etwa 4 m² erzeugbar ist.

11. Schleifenrahmen nach einem der Ansprüche 1 bis 9,
**dadurch gekennzeichnet,**
**dass** bei einer Segmentlänge von 100 cm zwischen den Drehachsen an beiden Enden eines Verbindungsrohres (3) und der Form des Rahmens als Quadrat mit 8 Verbindungsrohren eine Schleifeninnenfläche von etwa 4 m² erzeugbar ist.

12. Schleifenrahmen nach einem der Ansprüche 1 bis 9,
**dadurch gekennzeichnet,**
**dass** bei einer Segmentlänge von 100 cm zwischen den Drehachsen an beiden Enden eines Verbindungsrohres (3) und der Form des Rahmens als Rechteck (33) mit 6 Verbindungsrohren eine Schleifeninnenfläche von etwa 2 m² erzeugbar ist.

13. Schleifenrahmen nach einem der Ansprüche 1 bis 9,
**dadurch gekennzeichnet,**
**dass** bei einer Segmentlänge von 100 cm zwischen den Drehachsen an beiden Enden eines Verbindungsrohres (3) und der Form des Rahmens als Quadrat mit 4 Verbindungsrohren eine Schleifeninnenfläche von etwa 1 m² erzeugbar ist.
